# EUROPÄISCHE PATENTANMELDUNG

(11) **EP 0 648 639 A1**
(43) Veröffentlichungstag der Anmeldung: **19.04.1995**
(21) Anmeldenummer: 94113261.5
(22) Anmeldetag: 25.08.1994
(51) Int. Cl.: B60K 37/02

(54) **Anzeigevorrichtung für Kraftfahrzeuge**

(30) Priorität: 13.10.1993 DE 4334855
(71) Anmelder: ROBERT BOSCH GMBH, 70442 Stuttgart (DE)
(72) Erfinder: Koenig, Winfried, Dr. Dipl.-Ing., D-76327 Pfinztal (DE)

(57) **Zusammenfassung**

Die Erfindung betrifft eine Anzeigevorrichtung (10) für Kraftfahrzeuge mit einer ersten Anzeige (12) und einer zweiten als Leuchtanzeige ausgebildeten Anzeige (18), wobei die Leuchtanzeige (18) an einer der ersten Anzeige (12) vorgelagerten Reflexionsfläche (14) eingespiegelt wird, mit der in Abhängigkeit bestimmter Fahrsituationen mehrere Anzeigen einer Anzeigevorrichtung unabhängig voneinander für den Fahrzeugführer sichtbar gemacht werden können.

Dazu ist vorgesehen, daß die Reflexionsfläche (14) in ihrer optischen Transmission veränderbar ist.

## Beschreibung

### Stand der Technik

Die Erfindung betrifft eine Anzeigevorrichtung für Kraftfahrzeuge mit einer ersten Anzeige und einer zweiten als Leuchtanzeige ausgebildeten Anzeige, wobei die Leuchtanzeige an einer der ersten Anzeige vorgelagerten Reflexionsfläche eingespiegelt wird.

Es ist bekannt, in Kraftfahrzeuge Anzeigeinstrumente einzusetzen, die einerseits für den Fahrzeugführer Informationen, die die gegenwärtige Fahrtsituation wiedergeben, beispielsweise Fahrtgeschwindigkeit, Drehzahl usw. bereitstellen und andererseits den Fahrzeugführer auf bestimmte Gefahrensituationen, beispielsweise Überschreiten der zulässigen Betriebstemperatur und ähnliches, hinweisen. Hierbei sind die Anzeigeinstrumente so ausgelegt, daß die die Fahrtinformationen wiedergebenden ständig anzeigen, während die die Gefahrensituationen wiedergebenden Anzeigeinstrumente nur bei Bedarf eingeschaltet werden.

Es ist bekannt, für die Anzeigeinstrumente sowohl mechanische Anzeigen als auch Leuchtanzeigen zu verwenden. In der Regel werden für Kraftfahrzeuge Kombiinstrumente eingesetzt, die mechanische Anzeigen, die nicht elektrisch ein- und ausgeschaltet werden können, beispielsweise für die Fahrtgeschwindigkeit, besitzen, während Leuchtfelder in den Kombiinstrumenten vorgesehen sind, die nur bei Eintreten einer Warnsituation elektrisch eingeschaltet werden können.

Es ist bereits vorgeschlagen worden, diese Instrumente so anzuordnen, daß bei einem Kombiinstrument mit einer mechanischen Anzeige verschiedene Warnleuchten über eine Abdeckscheibe der mechanischen Anzeige zusätzlich eingespiegelt werden können. Die Abdeckscheibe ist dabei als teildurchlässige Scheibe ausgebildet, so daß der Fahrzeugführer die mechanische Anzeige jederzeit ablesen kann, während die Warnleuchten auf die Abdeckscheibe eingespiegelt werden, so daß der Fahrzeugführer ein der eingespiegelten Warnleuchte entsprechendes virtuelles Bild, das hinter der mechanischen Anzeige liegt, wahrnimmt. Durch geeignete Gestaltung und Anordnung der einzelnen Anzeigen kann zwar erreicht werden, daß keine Teile der eingespiegelten Warnleuchten irgendwelche Teile der mechanischen Anzeige überdecken, jedoch ist es nachteilig, daß das mechanische Anzeigeinstrument auch während des Zuschaltens einer Warnleuchte sichtbar bleibt und somit der Fahrzeugführer die zugeschaltete Warnleuchte nur mit erhöhter Aufmerksamkeit wahrnimmt.

Es ist weiterhin nachteilig, daß zur Erregung der Aufmerksamkeit des Fahrzeugführers auf die Warnleuchten bei Einsatz eines mechanischen Anzeigeinstrumentes für die normale Fahrtinformation dieses nicht ein- und ausgeschaltet werden kann.

### Vorteile der Erfindung

Die erfindungsgemäße Anzeigevorrichtung mit den kennzeichnenden Merkmalen des Hauptanspruchs hat demgegenüber den Vorteil, daß auch bei Verwendung von vorzugsweise mechanischen Anzeigen bei geringem Einbauraum eine verbesserte Informationsdarstellung mit Anzeigeinstrumenten für den Fahrzeugführer möglich ist.

Dies wird dadurch erreicht, indem das Verhältnis von durchgelassenem und reflektiertem Licht und damit die optische Transmission einer der ersten Anzeige vorgelagerten Reflexionsfläche verändert wird.

Durch die Veränderbarkeit der optischen Transmission wird in einfacher Weise erreicht, daß mehrere Anzeigen einer Anzeigevorrichtung, wobei wenigstens eine der Anzeigen eine mechanische Anzeige sein kann, unabhängig voneinander für den Betrachter sichtbar gemacht werden können. Somit ist es möglich, daß bei Eintreten einer Warnsituation ein entsprechender Warnhinweis für den Fahrzeugführer sichtbar wird, während gleichzeitig beispielsweise die mechanische Anzeige, ohne diese abzuschalten, für den Fahrzeugführer unsichtbar wird.

In vorteilhafter Ausgestaltung der Erfindung ist vorgesehen, daß wenn die Anzeigevorrichtung mehrere auszublendende Anzeigen aufweist, daß die Reflexionsfläche derart in Bereiche unterteilt ist, daß wahlweise nur bestimmte oder auch alle Anzeigen für den Fahrzeugführer ausgeblendet werden können.

In sehr vorteilhafter Weise ist im Rahmen der Erfindung auch möglich, die Anzeige nicht komplett auszublenden, sondern diese je nach Bedarf in ihrer optischen Sichtbarkeit stark einzuschränken, so daß diese in jedem Falle noch wahrgenommen werden kann. Hierdurch wird erreicht, daß bei während einer Fahrt auftretenden Warnsituationen der Fahrzeugführer über die eingespiegelte Warnleuchte auf die Situation aufmerksam gemacht wird, während er gleichzeitig die anliegenden Betriebsinformationen gerade noch erkennen kann.

Weitere vorteilhafte Ausgestaltungen der Erfindung ergeben sich aus den in den Unteransprüchen aufgeführten Merkmalen.

### Zeichnung

Die Erfindung wird nachfolgend in einem Ausführungsbeispiel anhand der zugehörigen Zeichnungen näher erläutert. Es zeigen:
- Figur 1: schematisch eine Anzeigevorrichtung im Schnitt und
- Figur 2: eine perspektivische Ansicht einer Reflexionsfläche.

### Beschreibung des Ausführungsbeispiels

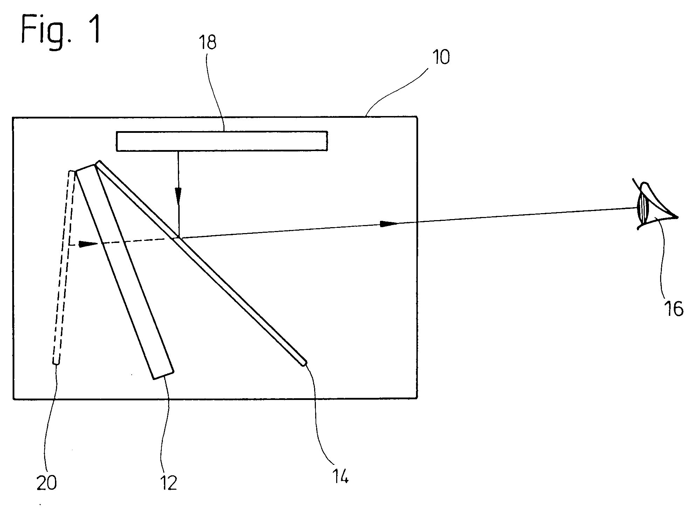

Die Figur 1 zeigt eine allgemein mit 10 bezeichnete Anzeigevorrichtung. Die Anzeigevorrichtung 10 weist eine mechanische Anzeige 12, beispielsweise einen Tachometer, auf. Der mechanischen Anzeige 12 ist eine als Reflexionsfläche 14 ausgebildete Abdeckscheibe vorgelagert, durch die ein hier angedeuteter Fahrzeugführer 16 auf die mechanische Anzeige 12 blickt. Oberhalb der Reflexionsfläche 14 ist eine Leuchtanzeige 18, beispielsweise ein Display, angeordnet, dessen Leuchtfeld für den Fahrzeugführer 16 in normaler Sitzposition nicht sichtbar ist. Die Reflexionsfläche 14 ist als elektrisch steuerbares Lichtventil, beispielsweise als ein großflächiges Flüssigkristalldisplay, ausgebildet.

Auf die Darstellung einzelner elektrischer bzw. mechanischer Anschlüsse wurde aus Gründen der Übersichtlichkeit verzichtet.

Die in der Figur 1 gezeigte Anordnung übt folgende Funktion aus:
Während der Fahrt eines Kraftfahrzeuges wird an der mechanischen Anzeige 12, die beispielsweise ein mechanischer Tachometer ist, die derzeitige Fahrtgeschwindigkeit mit einem Zeigerinstrument angezeigt. Der Fahrzeugführer 16 blickt durch die teildurchlässige Reflexionsfläche 14 und kann die für ihn bestimmten Informationen mühelos ablesen. Tritt während der Fahrt eine Gefahrensituation auf, auf die der Fahrzeugführer 16 aufmerksam gemacht werden soll, beispielsweise das Überschreiten einer bestimmten Betriebstemperatur des Antriebsmotors, wird ein entsprechendes Display der Leuchtanzeige 18 elektrisch eingeschaltet. Das von dem Display ausgesandte Licht trifft an einer vorherbestimmten Stelle auf die Reflexionsfläche 14 und wird von dieser in Richtung des Fahrzeugführers 16 reflektiert. Durch diese Reflexion nimmt der Fahrzeugführer 16 ein dem eingeschalteten Display entsprechendes virtuelles Bild an der Stelle 20 wahr. Somit erhält der Fahrzeugführer 16 den Eindruck einer räumlichen Anzeigevorrichtung, in der er sowohl die mechanische Anzeige 12 als auch die Leuchtanzeige 18 wahrnimmt. Es wird jedoch gleichzeitig mit der Leuchtanzeige 18 die als elektrisch steuerbares Lichtventil ausgebildete Reflexionsfläche 14 aktiviert, so daß diese ihren optischen Transmissionsgrad, das heißt das Verhältnis von durchgelassenem zu reflektiertem Licht, verändert. Die Veränderung der optischen Transmission erfolgt dahingehend, daß die mechanische Anzeige 12 für den Fahrzeugführer 16 nicht mehr sichtbar wird, die Teildurchlässigkeit der Reflexionsfläche 14 also aufgehoben wird. Nunmehr nimmt der Fahrzeugführer 16 nur noch das der Leuchtanzeige 18 entsprechende virtuelle Bild 20 wahr. Durch diese Änderung der für den Fahrzeugführer 16 sichtbaren Anzeige wird dieser auf eine entstandene Gefahrensituation besonders deutlich aufmerksam gemacht, da die Anzeigevorrichtung 10 im Kraftfahrzeug so angeordnet ist, daß diese auch von einem in Fahrtrichtung des Fahrzeuges blickenden Fahrzeugführer 16 zumindest im Unterbewußtsein wahrgenommen wird, so daß die beschriebene Veränderung der Anzeigevorrichtung 10 eine Reaktion des Fahrzeugführers 16 sicher auslöst. Die Veränderbarkeit der Einstellung der optischen Transmission der Reflexionsfläche 14 erfolgt automatisch in Abhängigkeit der Zuschaltung einer oder auch nur einer bestimmten Leuchtanzeige 18.

Somit ergeben sich im einzelnen eine Reihe von Schaltzuständen der Anzeigevorrichtung 10.

Die Reflexionsfläche 14 ist dabei so ausgestaltet, daß sie unabhängig von ihrem Schaltzustand an ihrer dem Fahrzeugführer 16 zugewandten Seite eine solche Reflexionsoberfläche aufweist, die jederzeit einen merklichen Reflexionsgrad besitzt, so daß die Leuchtanzeige 18 auch tatsächlich jederzeit als virtuelles Bild wahrgenommen werden kann.

Wird als Reflexionsfläche 14 beispielsweise ein Flüssigkristalldisplay eingesetzt, ist dieser merkliche Reflexionsgrad durch die Grenzschichten zwischen Luft und Polarisator gegeben.

In einer ersten Variante ist die Leuchtanzeige 18 eingeschaltet und die Reflexionsfläche 14 auf eine hohe Transmission geschaltet. In diesem Fall sind für den Fahrzeugführer 16 sowohl die mechanische Anzeige 12 als auch die Leuchtanzeige 18 sichtbar.

In einer zweiten Variante ist die Leuchtanzeige 18 ausgeschaltet und die Reflexionsfläche 14 auf eine hohe Transmission geschaltet, so daß für den Fahrzeugführer 16 nur die mechanische Anzeige 12 sichtbar ist.

In einer dritten Variante ist die Leuchtanzeige 18 eingeschaltet und die Reflexionsfläche 14 auf eine geringe Transmission geschaltet. Hierbei wird für den Fahrzeugführer 16 nur die Leuchtanzeige 18 als virtuelles Bild 20 sichtbar. Die mechanische Anzeige 12 ist durch Verringerung der Lichtdurchlässigkeit der Reflexionsfläche 14 nicht sichtbar.

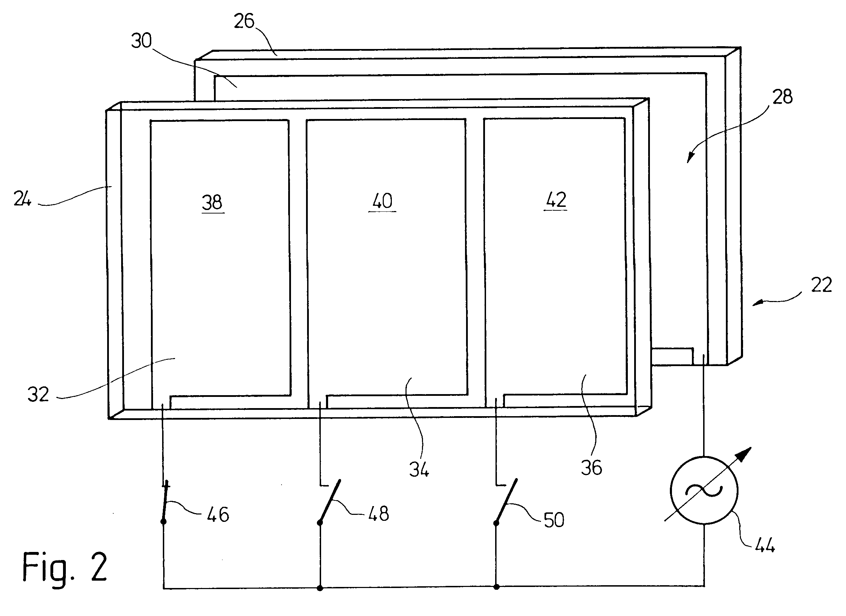

In der Figur 2 ist eine spezielle Ausgestaltung der Reflexionsfläche 14 gezeigt. Die Reflexionsfläche 14 besteht hier aus einer Flüssigkristallzelle 22, die nach der sogenannten NCAP-LCD-Bauart aufgebaut ist. Die Flüssigkristallzelle 22 besteht aus einem ersten Substrat 24 und einem zweiten Substrat 26, zwischen denen eine Polymerschicht 28 angeordnet ist. Innerhalb der Polymerschicht 28 sind hier nicht dargestellte Tröpfchen aus Flüssigkristall-Molekülen eingelagert. Das Substrat 26 besitzt an seiner Innenseite eine metallische, transparente Elektrodenfläche 30. Auf einer Innenfläche des Substrats 26 sind drei elektrisch voneinander getrennte metallische transparente Elektrodenflächen 32, 34 und 36 angeordnet. Die Elektrodenflächen 32, 34 und 36 teilen die Flüssigkristallzelle 22 in drei Zonen 38, 40 und 42 auf. Die Elektrodenflächen 30, 32, 34 und 36 sind mit einer regelbaren Wechselspannungsquelle 44 verbunden. Zwischen der Spannungsquelle 44 und den Elektrodenflächen 32, 34 und 36 sind jeweils Schalter 46, 48 und 50 angeordnet.

Die in der Figur 2 gezeigte Anordnung übt folgende Funktion aus:
Bezüglich der generellen Funktion einer ihren optischen Transmissionsgrad ändernden Reflektionsfläche wird auf das bereits zur Figur 1 Gesagte verwiesen. In der hier gezeigten Variante besitzt die aus der Flüssigkristallzelle 22 bestehende Reflektionsfläche drei Zonen 38, 40 und 42, die unabhängig voneinander in ihrem Transmissionsgrad verändert werden können, so daß sich je nach Ansteuerung der Reflexionsfläche verschiedene Kombinationsmöglichkeiten für die aktuelle Anzeigesituation ergeben.

Wird die Spannungsquelle 44 eingeschaltet und wenigstens einer der Schalter 46, 48 bzw. 50 geschlossen, in der Darstellung ist der Schalter 46 geschlossen, so richten sich die sich in den Tröpfchen innerhalb der Polymerschicht 28 befindenden Flüssigkristall-Moleküle in der zugeschalteten Zone zwischen den Elektrodenflächen 30, 32, 34 bzw. 36 gleichmäßig aus. In der Zone der gleichmäßigen Ausrichtung der Flüssigkristall-Moleküle steigt der optische Transmissionsgrad der Flüssigkristallzelle 22 an. In dem gezeigten Beispiel ist die Elektrodenfläche 38 über den Schalter 46 und die Elektrodenfläche 30 mit der Wechselspannungsquelle 44 verbunden. Somit würde die hier gezeigte Flüssigkristallzelle 22 im Bereich der Zone 38 einen hohen optischen Transmissionsgrad aufweisen und im Bereich der Zonen 40 und 42 einen niedrigen optischen Transmissionsgrad aufweisen. Dadurch würde eine hinter der Flüssigkristallzelle 22 im Bereich der Zone 38 angeordnete, hier nicht dargestellte, Anzeige für einen Betrachter sichtbar werden, während hinter den Zonen 40 und 42 angeordnete Anzeigen nicht erkennbar sind. Durch eine entsprechende Ansteuerung der Schalter 46, 48 und 50 können also unterschiedliche Bereiche der Flüssigkristallzelle 22 in ihrem optischen Transmissionsgrad verändert werden. In den Zonen, in denen die dort angeordnete Elektrodenfläche nicht über einen geschlossenen Schalter mit der Spannungsquelle 44 verbunden sind, bleiben die Flüssigkristallmoleküle innerhalb der Polymerschicht 28 ungeordnet und streuen somit einfallendes Licht. Ein vor der Flüssigkristallzelle 22 sitzender Betrachter sieht in diesen Zonen eine milchige, streuende Reflexionsfläche und kann eine dahinter liegende Anzeige nicht erkennen.

Durch eine Regelung der Wechselspannungsquelle 44, das heißt eine Variation der Spannung, ist die elektrooptische Kennlinie der Flüssigkristallzelle 22 stufenlos einstellbar. Hierdurch kann der optische Transmissionsgrad der zugeschalteten Zonen der Flüssigkristallzelle 22 so eingestellt werden, daß eine hinter der Flüssigkristallzelle 22 angeordnete Anzeige entweder deutlich, weniger deutlich oder gar nicht erkennbar ist. Die Einstellung des optischen Transmissionsgrades kann dabei beispielsweise stufenlos von Null bis 100 % erfolgen.

Als eigentlich reflektierende Schicht für die bereits erwähnte Reflexionsfläche, an der die in Figur 1 genannte Leuchtanzeige 18 eingespiegelt wird, wird der Übergang von Luft zur ersten Grenzfläche des Substrats 24 benutzt. Diese Reflektion beruht auf der abrupten Änderung des Brechungsindex.

Die Erfindung beschränkt sich nicht auf die beschriebenen Ausführungsbeispiele, sondern so ist insbesondere auch möglich, die mechanische Anzeige 12 ebenfalls als Leuchtanzeige auszuführen, die bei auf geringe Transmission geschalteter Reflexionsfläche 14 dann ebenfalls nicht sichtbar würde.

Weiterhin ist sehr vorteilhaft möglich, die Reflexionsfläche 14 so anzuschalten, daß diese nur bei ausgewählten Anzeigen der Leuchtanzeige 18 aktiviert wird, so daß beispielsweise bei einer minder wichtigen Warnung die mechanische Anzeige 12 trotzdem sichtbar bleibt, während diese bei einer eine erhebliche Gefahrensituation wiedergebenden Warnung sofort abgeschaltet und unsichtbar wird.

Das Flüssigkristalldisplay kann beispielsweise ein TN-Flüssigkristalldisplay oder ein Flüssigkristalldisplay mit einem NCAP-Effekt sein. Weiterhin ist der Einsatz anderer elektrisch steuerbarer Lichtventile, wie beispielsweise PLZT-Keramik, möglich.

Nach einem nicht beschriebenen Beispiel kann die Reflexionsfläche 14 auch ein anderes Lichtventil sein, bei dem der Reflexionsgrad durch die Grenzflächen zwischen Luft und Substrat gegeben ist.

## Patentansprüche

1. Anzeigevorrichtung für Kraftfahrzeuge mit einer ersten Anzeige und einer zweiten als Leuchtanzeige ausgebildeten Anzeige, wobei die Leuchtanzeige an einer der ersten Anzeige vorgelagerten Reflexionsfläche eingespiegelt wird, **dadurch gekennzeichnet,** daß die Reflexionsfläche (14) in ihrer optischen Transmission veränderbar ist.

2. Anzeigevorrichtung nach Anspruch 1, **dadurch gekennzeichnet,** daß die Reflexionsfläche (14) Bereiche mit unterschiedlicher optischer Transmission aufweist.

3. Anzeigevorrichtung nach einem der vorhergehenden Ansprüche, **dadurch gekennzeichnet,** daß die Bereiche mit unterschiedlicher optischer Transmission getrennt ansteuerbar sind.

4. Anzeigevorrichtung nach einem der vorhergehenden Ansprüche, **dadurch gekennzeichnet,** daß die optische Transmission der Reflexionsfläche (14) kontinuierlich oder in Stufen veränderbar ist.

5. Anzeigevorrichtung nach einem der vorhergehenden Ansprüche, **dadurch gekennzeichnet,** daß die Reflexionsfläche (14) ein elektrisch steuerbares Lichtventil ist.

6. Anzeigevorrichtung nach einem der vorhergehenden Ansprüche, **dadurch gekennzeichnet,** daß die Reflexionsfläche (14) eine in Richtung eines Fahrzeugführers (16) weisende, vom Schaltzustand der Reflexionsfläche (14) unabhängigen Reflexionsgrad aufweisende Oberfläche besitzt.

7. Anzeigevorrichtung nach einem der vorhergehenden Ansprüche, **dadurch gekennzeichnet,** daß als Reflexionsfläche (14) ein Flüssigkristalldisplay verwendet wird.
